# EUROPEAN PATENT APPLICATION

(11) **EP 4 590 013 A1**
(43) Date of publication of application: **23.07.2025**
(21) Application number: 22958350.5
(22) Date of filing: 13.09.2022
(51) Int. Cl.: H04W 24/02

(54) **SENSING BY PROXY MEASUREMENT METHOD, ELECTRONIC DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2022/118461
(87) International publication number: WO 2024/055156

(57) **Abstract**

Embodiments of the present disclosure relate to the technical field of mobile communications, and provide a sensing by proxy (SBP) measurement method, an electronic device, and a storage medium. The SBP measurement method is applied to an SBP responder. The method comprises: in an SBP measurement process, sending a first polling frame to an SBP initiator; and receiving a clear to send to self (CTS-to-self) frame fed back by the SBP initiator for the first polling frame, and sending an SBP measurement report to the SBP initiator. The embodiments of the present disclosure provide a mode for feeding back an SBP measurement result in SBP measurement.

## Description

### TECHNICAL FILED

Embodiments of this disclosure relate to the field of mobile communication technology, and in particular, to a Sensing By Proxy (SBP) measurement method, an electronic device, and a storage medium.

### BACKGROUND

In current Wi-Fi technologies, Wireless Local Area Network (WLAN) sensing may be supported. For example, WLAN sensing is applicable to scenarios such as location discovery in dense environments (e.g., home or enterprise environments), proximity detection, and presence detection.

In a WLAN sensing process, identities of a Station (STA) and an Access Point (AP) can usually be interchanged, for example, both can serve as a sensing initiator (or called a sensing transmitter). An AP, when serving as a sensing initiator or transmitter, can communicate with multiple STAs simultaneously. However, an STA does not possess this capability and can only communicate with a single sensing responder in a one-to-one manner, which leads to inefficient spectrum utilization and increased latency. To address this issue, a method is proposed where an AP serves as a proxy for an STA to perform WLAN sensing measurements, known as Sensing By Proxy (SBP) measurements. After completing the sensing measurement, the SBP responder will provide feedback to the SBP initiator on a sensing measurement result. Therefore, there is a need to provide a method for feedback of the sensing measurement result in the SBP sensing measurement.

### SUMMARY

Embodiments of this disclosure provide an SBP measurement method, an electronic device, and a storage medium to provide a method for feedback of the sensing measurement result in the SBP sensing measurement.

In one aspect, an embodiment of this disclosure provides an SBP measurement method, applied to an SBP responder. The method includes:
sending, during an SBP sensing measurement process, a first poll frame to an SBP initiator; and
sending, upon receiving a Clear to Send to Self (CTS-to-self) frame fed back by the SBP initiator in response to the first poll frame, an SBP sensing measurement report to the SBP initiator.

In another aspect, an embodiment of this disclosure embodiment also provides an SBP measurement method, applied to an SBP initiator. The method includes:
receiving, during an SBP sensing measurement process, a first poll frame sent by an SBP responder;
sending a CTS-to-self frame to the SBP responder in response to the first poll frame; and
receiving an SBP sensing measurement report sent by the SBP responder.

In another aspect, an embodiment of this disclosure also provides an electronic device, which is an SBP responder. The electronic device includes:
a poll frame sending module configured to send a first poll frame to an SBP initiator during an SBP sensing measurement process; and
a report sending module configured to send an SBP sensing measurement report to the SBP initiator upon receiving a CTS-to-self frame fed back by the SBP initiator in response to the first poll frame.

In another aspect, an embodiment of this disclosure also provides an electronic device, which is an SBP initiator. The electronic device includes:
a poll frame receiving module configured to receive a first poll frame sent by an SBP responder during an SBP sensing measurement process;
a CTS sending module configured to send a CTS-to-self frame to the SBP responder in response to the first poll frame; and
a report receiving module configured to receive an SBP sensing measurement report sent by the SBP responder.

An embodiment of this disclosure also provides an electronic device, including a memory, a processor, and a computer program stored on the memory and executable on the processor. When the processor executes the program, it implements one or more of the methods in the embodiments of this disclosure.

An embodiment of this disclosure also provides a computer-readable storage medium. A computer program is stored on the computer-readable storage medium. When the computer program is executed by a processor, it implements one or more of the methods in the embodiments of this disclosure.

In the embodiments of this disclosure, during the SBP sensing measurement process, the SBP responder sends a first poll frame to the SBP initiator, and if a CTS-to-self frame fed back by the SBP initiator in response to the first poll frame is received, the SBP responder sends an SBP sensing measurement report to the SBP initiator. This avoids a waste of signaling resources caused by still sending the SBP sensing measurement report to the SBP initiator when the SBP initiator is no longer within the signal coverage of the SBP responder.

The additional aspects and advantages of the embodiments of this disclosure will be partially given in the following description. These will become apparent from the following description or can be learned through the practice of this disclosure.

### BRIEF DESCRIPTION OF THE DRAWINGS

To illustrate technical solutions of embodiments of this disclosure more clearly, the drawings required for the description of the embodiments of this disclosure will be briefly introduced below. Obviously, the drawings in the following description show only some of the embodiments of this disclosure. For those of ordinary skill in the art, other drawings can be obtained without creative efforts based on these drawings.
FIG. 1 is a flowchart of an SBP measurement method provided by embodiments of this disclosure.
FIG. 2 is a schematic diagram of a first example of the embodiments of this disclosure.
FIG. 3 is a schematic diagram of the first example of the embodiments of this disclosure.
FIG. 4 is a schematic diagram of the first example of the embodiments of this disclosure.
FIG. 5 is a schematic diagram of a second example of the embodiments of this disclosure.
FIG. 6 is a flowchart of an SBP measurement method provided by the embodiments of this disclosure.
FIG. 7 is a flowchart of an SBP measurement method provided by the embodiments of this disclosure.
FIG. 8 is a structural schematic diagram of an electronic device provided by the embodiments of this disclosure.
FIG. 9 is a structural schematic diagram of an electronic device provided by the embodiments of this disclosure.
FIG. 10 is a structural schematic diagram of an electronic device provided by the embodiments of this disclosure.

### DETAILED DESCRIPTION

In the embodiments of this disclosure, the term "and/or" describes a association relationship of related objects, indicating that three relationships can exist. For example, A and/or B can indicate: A exists alone, A and B exist simultaneously, and B exists alone. The character "/" generally indicates an "or" relationship between the associated objects before and after it.

In the embodiments of this disclosure, the term "multiple" refers to two or more, and other quantifiers are similar.

Here, the exemplary embodiments will be described in detail, the examples of which are shown in the drawings. When the following description involves the drawings, unless otherwise indicated, the same numbers in different drawings represent the same or similar elements. The implementations described in the following exemplary embodiments do not represent all implementations consistent with the present invention. On the contrary, they are only examples of devices and methods consistent with some aspects of the present invention as detailed in the appended claims.

The terms used in this disclosure are only for the purpose of describing specific embodiments and are not intended to limit this disclosure. The singular forms "a/an", "the" and "this" used in this disclosure and the appended claims are also intended to include plural forms unless the context clearly indicates otherwise. It should also be understood that the term "and/or" used herein refers to and includes any or all possible combinations of one or more related listed items.

It should be understood that although the terms "first," "second," "third," etc. may be used in this disclosure to describe various information, these information should not be limited to these terms. These terms are only used to distinguish the same type of information from each other. For example, without departing from the scope of this disclosure, the first information can also be referred to as the second information, and similarly, the second information can also be referred to as the first information. Depending on the context, for example, the word "if" used herein can be interpreted as "at the time of...", "when...", or "in response to determining..."

The technical solutions in the embodiments of this disclosure embodiment will be clearly and completely described below in combination with the drawings in the embodiments of this disclosure. Obviously, the described embodiments are only a part of the embodiments of this disclosure, not all of them. Based on the embodiments in this disclosure, all other embodiments obtained by those of ordinary skill in the art without creative efforts belong to the scope of protection of this disclosure.

The embodiments of this disclosure provide a Sensing By Proxy (SBP) measurement method, an electronic device, and a storage medium to provide a method for feedback of a sensing measurement result in SBP sensing measurement.

Among them, the method and the device are based on the same application concept. Since the principles of the method and the device for solving problems are similar, the implementation of the device and the method can refer to each other, and repeated parts will not be described again.

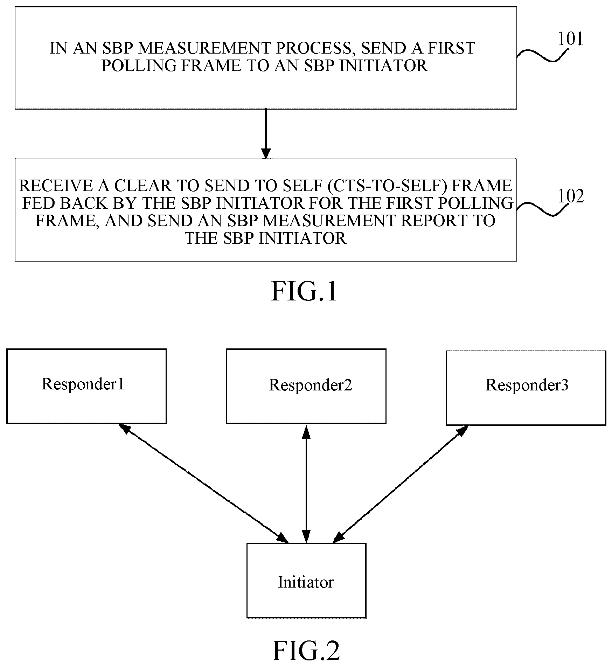

As shown in FIG. 1, an embodiment of this disclosure provides an SBP measurement method. Optionally, the method can be applied to an SBP responder. The SBP responder is, for example, an AP. The method can include the following steps.

Step 101, sending, during an SBP sensing measurement process, a first poll frame to an SBP initiator.

As a first example, please refer to FIGS. 2 to 4. The architecture of WLAN Sensing and the WLAN Sensing process to which the SBP measurement method provided by the embodiments of this disclosure is applied will be introduced first.

FIG. 2 shows a schematic diagram of the architecture of a WLAN Sensing (process). A sensing initiator (or called initiator) initiates a WLAN Sensing (e.g., a WLAN sensing session), and there may be multiple sensing responders (or sensing receivers) or responders responding to it, as shown by Responder 1, Responder 2, and Responder 3 in FIG. 2. When the sensing initiator initiates the WLAN Sensing, multiple associated or non-associated sending responders of the WLAN Sensing can respond.

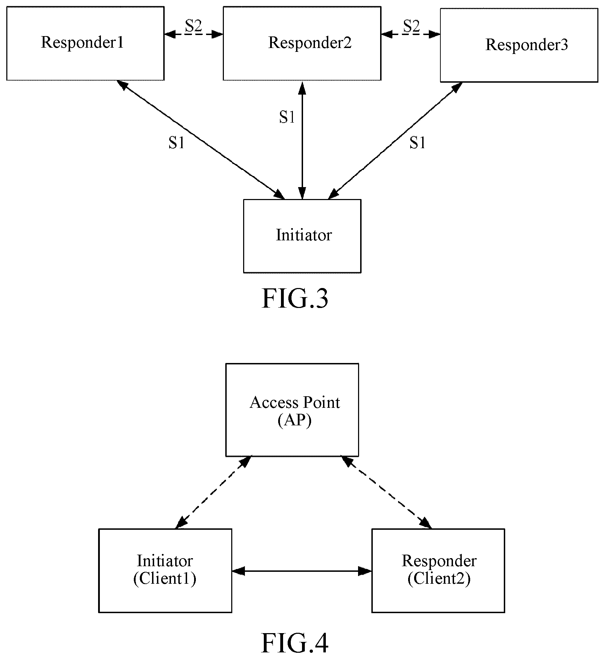

Referring to FIG. 3, the sensing initiator and the sensing responder communicate through a communication connection, such as communication connection S1; the sensing responders communicate with each other through communication connection S2.

Each sensing initiator can be a client; each sensing responder (in this example, that is, Responder 1 to Responder 3) can be a Station (STA) or an Access Point (AP) device. In addition, the STA and the AP can assume multiple roles during the WLAN sensing process. For example, during the WLAN sensing process, the STA can also be a sensing initiator. The sensing initiator may be a sensing transmitter, a sensing receiver, or both, or neither. During the WLAN sensing process, the sensing responder may also be a sensing transmitter, a sensing receiver, or both.

As an another architecture, as shown in FIG. 4, both the sensing initiator and the sensing responder can be clients, and they can communicate by connecting to the same AP. In FIG. 4, Client1 is the sensing initiator, and Client2 is the sensing responder.

Generally, the WLAN sensing process usually includes two approaches: Triggered Based Sounding (TB) and Non-TB based sensing. Specifically, the TB sensing measurement method means that the AP is the initiator or transmitter, and the Non-TB sensing measurement method means that the STA is the initiator or transmitter.

Furthermore, the SBP responder serves as an SBP proxy to initiate a WLAN sensing measurement. The initiated WLAN sensing measurement is a TB sensing measurement. The TB sensing measurement is divided into a Null Data Packet Announcement (NDPA) Sounding (downlink, DL) sensing and a Trigger Frame (TF) Sounding (uplink, UL) process.

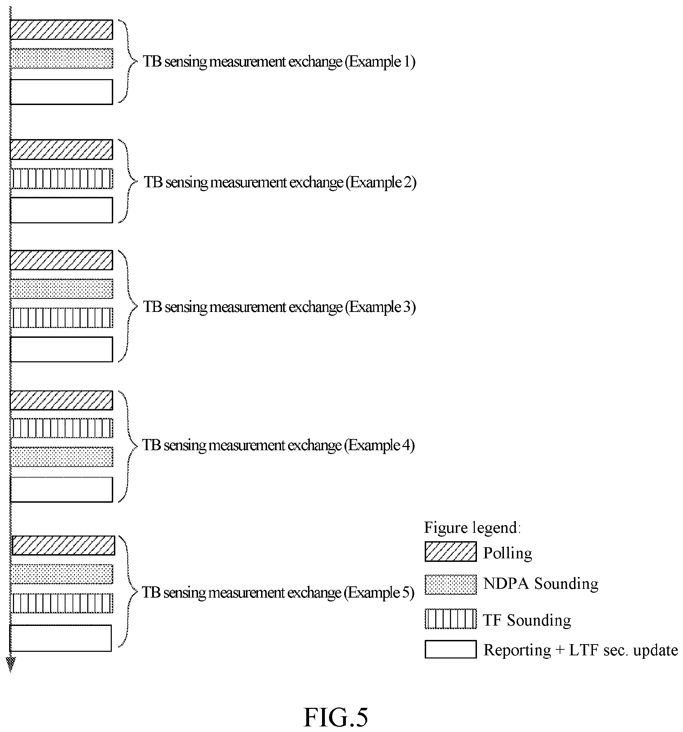

As a second example, the TB sensing measurement process is shown in FIG. 5. FIG. 5 shows multiple sensing measurement exchanges of a sensing measurement in a TB sensing measurement process. In Examples 1 to 5, the sensing measurement process includes polling, sounding, and reporting (Reporting + LTF sec. update) processes. In each example, the sounding may only include NDPA Sounding or TF Sounding, or may include both.

During the SBP sensing measurement process, for example, in the second example above, in the polling phase of each sensing measurement exchange, the SBP responder sends a first poll frame to the SBP initiator (e.g., an STA). An STA info field in the first poll frame includes: an identifier of the SBP initiator, identifiers of other sensing responders (STAs), and resources for subsequent response to a Clear to Send to Self (CTS-to-self) frame by the sensing responder. Optionally, the identifier of the SBP initiator can be an Association Identifier (AID) or a User Identifier (UID). For a non-associated STA, a UID can be fed back, and its length is the same as that of an AID, indicating that the STA has not established an initial association with the AP.

Optionally, the first poll frame is a broadcast message frame. The SBP initiator may or may not participate in the subsequent sensing measurement. However, a Receiver Address (RA) field of the first poll frame always includes the address information of the SBP initiator.

Step 102, sending, upon receiving a CTS-to-self frame fed back by the SBP initiator in response to the first poll frame, an SBP sensing measurement report to the SBP initiator.

After the SBP responder sends the first poll frame to the SBP initiator, if a CTS-to-self frame fed back by the SBP initiator in response to the first poll frame is received, it is determined that the SBP initiator is still within the signal coverage of the SBP responder. At this time, an SBP sensing measurement report is sent to the SBP initiator. If the CTS-to-self frame is not received, it is possible that the SBP initiator is no longer within the signal coverage of the SBP responder. If an SBP sensing measurement report is sent to the SBP initiator at this time, the SBP initiator cannot receive it, resulting in a waste of signaling resources.

Specifically, in the WLAN scenario, CTS-to-self is used as a protection mechanism. When an STA prepares to occupy a channel, Network Allocation Vector (NAV) values of other stations are updated first. The STA sends a CTS frame, and the RA field of the CTS frame includes a MAC address of the STA. The duration information included in the CTS frame indicates the time period during which the channel will be occupied. Other stations that can monitor the CTS frame update their NAV values accordingly to avoid collisions. In this embodiment of the present disclosure, after the SBP responder sends the first poll frame, if the CTS-to-self frame is not received, it means that the SBP initiator does not prepare to occupy the channel, and thus it is no longer within the signal coverage of the SBP responder at this time.

In the embodiment of this disclosure, during the SBP sensing measurement process, the SBP responder sends a first poll frame to the SBP initiator, and if a CTS-to-self frame fed back by the SBP initiator in response to the first poll frame is received, the SBP responder sends an SBP sensing measurement report to the SBP initiator. This avoids a waste of signaling resources caused by still sending the SBP sensing measurement report to the SBP initiator when the SBP initiator is no longer within the signal coverage of the SBP responder. The embodiment of this disclosure provides a method for feedback of the sensing measurement result in the SBP sensing measurement.

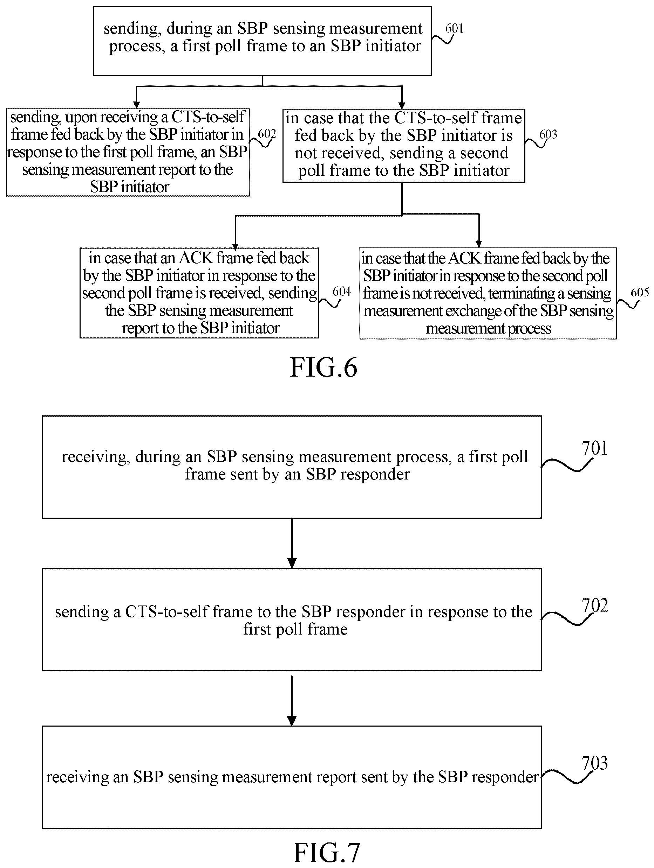

As shown in FIG. 6, an embodiment of this disclosure provides an SBP sensing measurement method. Optionally, the method can be applied to an SBP responder. The method can include the following steps.

Step 601, sending, during an SBP sensing measurement process, a first poll frame to an SBP initiator.

The first poll frame is a broadcast message frame. The SBP initiator may or may not participate in the subsequent sensing measurement. However, a RA field of the first poll frame always includes the address information of the SBP initiator.

Step 602, sending, upon receiving a CTS-to-self frame fed back by the SBP initiator in response to the first poll frame, an SBP sensing measurement report to the SBP initiator.

If a CTS-to-self frame fed back by the SBP initiator in response to the first poll frame is received, it is determined that the SBP initiator is still within the signal coverage of the SBP responder. At this time, an SBP sensing measurement report is sent to the SBP initiator.

Step 603, in case that the CTS-to-self frame fed back by the SBP initiator is not received, sending a second poll frame to the SBP initiator, where the second poll frame is a unicast message frame.

If the CTS-to-self frame fed back by the SBP initiator is not received, a second poll frame is sent to the SBP initiator to determine whether the SBP initiator is within the signal coverage of the SBP responder at this time.

Step 604, in case that an Acknowledgement (ACK) frame fed back by the SBP initiator in response to the second poll frame is received, sending the SBP sensing measurement report to the SBP initiator.

If an ACK frame fed back by the SBP initiator in response to the second poll frame is received, it is determined that the SBP initiator is still within the signal coverage of the SBP responder. At this time, an SBP sensing measurement report is sent to the SBP initiator.

Step 605, in case that the ACK frame fed back by the SBP initiator in response to the second poll frame is not received, terminating a sensing measurement exchange of the SBP sensing measurement process.

If the ACK frame fed back by the SBP initiator is not received, the SBP responder will not send the SBP sensing measurement report to the SBP initiator, but will terminate a sensing measurement exchange of the SBP sensing measurement process.

In an optional embodiment, the method further includes:
after completion of a sensing measurement exchange of TF Sounding, sending a third poll frame to the SBP initiator, where the third poll frame is a broadcast message frame; and
if an ACK frame fed back by the SBP initiator in response to the third poll frame is received, sending the SBP sensing measurement report to the SBP initiator,
if the ACK frame fed back by the SBP initiator in response to the third poll frame is not received, terminating a sensing measurement exchange of the SBP sensing measurement process.

After the completion of the sensing measurement exchange of the TF Sounding, the SBP responder sends a third poll frame to the SBP initiator, where the third poll frame is a broadcast message frame. If an ACK frame fed back by the SBP initiator is received, an SBP sensing measurement report is sent to the SBP initiator; otherwise, a sensing measurement exchange of the SBP sensing measurement process is terminated.

In an optional embodiment, the method further includes:
sending a trigger frame to the SBP initiator after completion of a sensing measurement exchange of NDPA Sounding, or after completion of the sensing measurement exchange of the NDPA Sounding and a sensing measurement exchange of TF Sounding; and
if an ACK frame fed back by the SBP initiator in response to the trigger frame is received, sending the SBP sensing measurement report to the SBP initiator,
if the ACK frame fed back by the SBP initiator in response to the trigger frame is not received, terminating a sensing measurement exchange of the SBP sensing measurement process.

In cases where a sensing measurement exchange of NDPA Sounding is included, or when both a sensing measurement exchange of TF Sounding and a sensing measurement exchange of NDPA Sounding occur simultaneously, the SBP responder sends a trigger frame to the SBP initiator after the completion of any of the sensing measurement exchanges to detect whether the SBP initiator is within the signal coverage range of the SBP responder. If an ACK frame fed back by the SBP initiator is received, it is determined that the SBP initiator is within the signal coverage range of the SBP responder, and an SBP sensing measurement report is sent to the SBP initiator; otherwise, a sensing measurement exchange of the SBP sensing measurement process is terminated.

In the embodiments of this disclosure, during the SBP sensing measurement process, the SBP responder sends a first poll frame to the SBP initiator, and if a CTS-to-self frame fed back by the SBP initiator in response to the first poll frame is received, the SBP responder sends an SBP sensing measurement report to the SBP initiator. This avoids a waste of signaling resources caused by still sending the SBP sensing measurement report to the SBP initiator when the SBP initiator is no longer within the signal coverage of the SBP responder.

Referring to FIG. 7, an embodiment of the present disclosure provides an SBP measurement method. Optionally, this method can be applied to an SBP initiator. The method can include the following steps.

Step 701, receiving, during an SBP sensing measurement process, a first poll frame sent by an SBP responder.

The first poll frame is a broadcast message frame.

The architecture of WLAN Sensing and the WLAN Sensing process to which the SBP measurement method provided in this embodiment of the present disclosure is applied are referred to the first example mentioned above, and will not be repeated here. The SBP responder serves as an SBP proxy to initiate a WLAN sensing measurement. The initiated WLAN sensing measurement is a TB sensing measurement, and the TB sensing measurement process is referred to the second example mentioned above, and will not be repeated here.

During the SBP sensing measurement process, for example, in the second example above, in the polling phase of each sensing measurement exchange, the SBP initiator receives a first poll frame sent by the SBP responder. An STA info field in the first poll frame includes: an identifier of the SBP initiator, identifiers of other sensing responders (STAs), and resources for subsequent response to a CTS-to-self frame by the sensing responder. Optionally, the identifier of the SBP initiator can be an AID or a UID. For a non-associated STA, a UID can be fed back, and its length is the same as that of an AID.

Optionally, the first poll frame is a broadcast message frame. The SBP initiator may or may not participate in the subsequent sensing measurement. However, a RA field of the first poll frame always includes the address information of the SBP initiator.

Step 702, sending a CTS-to-self frame to the SBP responder in response to the first poll frame.

The SBP initiator feeds back a CTS-to-self frame to the SBP responder in response to the first poll frame. Specifically, in the WLAN scenario, CTS-to-self is used as a protection mechanism. When an STA prepares to occupy a channel, NAV values of other stations are updated first. The STA sends a CTS frame, and the RA field of the CTS frame includes a MAC address of the STA. The duration information included in the CTS frame indicates the time period during which the channel will be occupied. Other stations that can monitor the CTS frame update their NAV values accordingly to avoid collisions. In this embodiment of the present disclosure, if the SBP initiator is within the signal coverage of the SBP responder, the SBP initiator will send a CTS-to-self frame first when it prepares to occupy the channel upon receiving the first poll frame.

Step 703, receiving an SBP sensing measurement report sent by the SBP responder.

If the SBP initiator sends a CTS-to-self frame, the SBP responder can determine that the SBP initiator is still within the signal coverage of the SBP responder at this time, and then send an SBP sensing measurement report to the SBP initiator. If the SBP initiator does not send a CTS-to-self frame, it is possible that the SBP initiator is no longer within the signal coverage of the SBP responder at this time. If the SBP responder sends an SBP sensing measurement report to the SBP initiator at this time, the SBP initiator cannot receive it, resulting in a waste of signaling resources.

In this embodiment of the present disclosure, during the SBP sensing measurement process, the SBP initiator receives a first poll frame sent by the SBP responder, and in response to the first poll frame, sends a CTS-to-self frame to the SBP responder, enabling the SBP responder to feedback the SBP sensing measurement report when it determines that the SBP initiator is within the signal coverage of the SBP responder based on the CTS-to-self frame. This avoids a waste of signaling resources caused by still sending the SBP sensing measurement report to the SBP initiator when the SBP initiator is no longer within the signal coverage of the SBP responder.

An embodiment of the present disclosure provides an SBP measurement method. Optionally, this method can be applied to an SBP initiator. The method can include the following steps:
receiving, during an SBP sensing measurement process, a first poll frame sent by an SBP responder, where the first poll frame is a broadcast message frame;
receiving a second poll frame sent by the SBP responder, where the second poll frame is a unicast message frame; and
sending an ACK frame to the SBP responder in response to the second poll frame, and receiving the SBP sensing measurement report sent by the SBP initiator.

The first poll frame is a broadcast message frame. The SBP initiator may or may not participate in the subsequent sensing measurement. However, a RA field of the first poll frame always includes the address information of the SBP initiator. If the SBP initiator does not feedback a CTS-to-self frame to the SBP responder, the SBP responder sends a second poll frame to the SBP initiator to determine whether the SBP initiator is within the signal coverage of the SBP responder at this time.

If the SBP initiator sends an ACK frame to the SBP responder, the SBP responder determines that the SBP initiator is still within the signal coverage of the SBP responder at this time, and will send an SBP sensing measurement report to the SBP initiator. The SBP initiator will receive the SBP sensing measurement report accordingly.

In an optional embodiment, the method further includes:
receiving a third poll frame sent by the SBP responder after completion of a sensing measurement exchange of TF Sounding, where the third poll frame is a broadcast message frame; and
sending an ACK frame to the SBP responder in response to the third poll frame, and receiving the SBP sensing measurement report sent by the SBP initiator.

After the completion of the sensing measurement exchange of the TF Sounding, the SBP responder sends a third poll frame to the SBP initiator, and the SBP initiator receives the third poll frame, where the third poll frame is a broadcast message frame. If an ACK frame fed back by the SBP initiator is received, the SBP responder sends an SBP sensing measurement report to the SBP initiator; otherwise, the SBP responder terminates a sensing measurement exchange of the SBP sensing measurement process.

In an optional embodiment, the method further includes:
receiving a trigger frame sent by the SBP responder after completion of a sensing measurement exchange of NDPA Sounding, or after completion of the sensing measurement exchange of the NDPA Sounding and a sensing measurement exchange of TF Sounding; and
sending an ACK frame to the SBP responder in response to the trigger frame, and receiving the SBP sensing measurement report sent by the SBP initiator.

In cases where a sensing measurement exchange of NDPA Sounding is included, or when both a sensing measurement exchange of TF Sounding and a sensing measurement exchange of NDPA Sounding occur simultaneously, the SBP responder sends a trigger frame to the SBP initiator after the completion of any of the sensing measurement exchanges to detect whether the SBP initiator is within the signal coverage range of the SBP responder. If the SBP initiator feeds back an ACK frame, the SBP responder determines that the SBP initiator is within the signal coverage range of the SBP responder, and sends an SBP sensing measurement report to the SBP initiator; otherwise, the SBP responder terminates a sensing measurement exchange of the SBP sensing measurement process.

In this embodiment of the present disclosure, during the SBP sensing measurement process, the SBP initiator receives a first poll frame sent by the SBP responder, and in response to the first poll frame, sends a CTS-to-self frame to the SBP responder, enabling the SBP responder to feedback the SBP sensing measurement report when it determines that the SBP initiator is within the signal coverage of the SBP responder based on the CTS-to-self frame. This avoids a waste of signaling resources caused by still sending the SBP sensing measurement report to the SBP initiator when the SBP initiator is no longer within the signal coverage of the SBP responder.

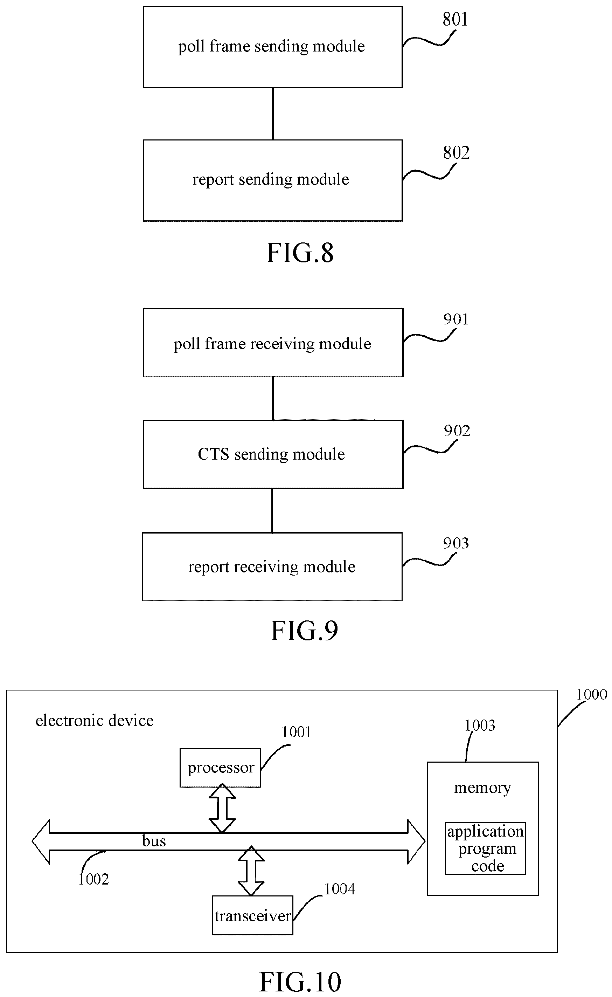

Referring to FIG. 8, based on the same principle as the method provided by the embodiments of the present disclosure, an embodiment of the present disclosure also provides an electronic device. The electronic device is an SBP responder, and the electronic device includes:
a poll frame sending module 801 configured to send a first poll frame to an SBP initiator during an SBP sensing measurement process; and
a report sending module 802 configured to send an SBP sensing measurement report to the SBP initiator upon receiving a CTS-to-self frame fed back by the SBP initiator in response to the first poll frame.

Optionally, in the embodiment of the present disclosure, the electronic device further includes:
a first processing module configured to: if the CTS-to-self frame fed back by the SBP initiator is not received, send a second poll frame to the SBP initiator, where the second poll frame is a unicast message frame;
if an ACK frame fed back by the SBP initiator in response to the second poll frame is received, send the SBP sensing measurement report to the SBP initiator,
if the ACK frame fed back by the SBP initiator in response to the second poll frame is not received, terminate a sensing measurement exchange of the SBP sensing measurement process.

Optionally, in the embodiment of the present disclosure, the electronic device further includes:
a second processing module configured to: send a third poll frame to the SBP initiator after completion of a sensing measurement exchange of TF Sounding, where the third poll frame is a broadcast message frame; and
if an ACK frame fed back by the SBP initiator in response to the third poll frame is received, send the SBP sensing measurement report to the SBP initiator,
if the ACK frame fed back by the SBP initiator in response to the third poll frame is not received, terminate a sensing measurement exchange of the SBP sensing measurement process.

Optionally, in the embodiment of the present disclosure, the electronic device further includes:
a third processing module configured to: send a trigger frame to the SBP initiator after completion of a sensing measurement exchange of NDPA Sounding, or after completion of a sensing measurement exchange of the NDPA Sounding and a sensing measurement exchange of TF Sounding; and
if an ACK frame fed back by the SBP initiator in response to the trigger frame is received, send the SBP sensing measurement report to the SBP initiator,
if the ACK frame fed back by the SBP initiator in response to the trigger frame is not received, terminate a sensing measurement exchange of the SBP sensing measurement process.

Optionally, in the embodiment of the present disclosure, the first poll frame is a broadcast message frame.

An embodiment of the present disclosure also provides an SBP measurement device applied to an SBP responder. The device includes:
a poll frame sending module configured to send a first poll frame to an SBP initiator during an SBP sensing measurement process; and
an SBP report sending module configured to send an SBP sensing measurement report to the SBP initiator upon receiving a CTS-to-self frame fed back by the SBP initiator in response to the first poll frame.

The device also includes other modules of the electronic device in the foregoing embodiments, and will not be repeated here.

Referring to FIG. 9, based on the same principle as the electronic device provided by the embodiment of the present disclosure, an embodiment of the present disclosure also provides an electronic device. The electronic device is an SBP initiator, and the electronic device includes:
a poll frame receiving module 901 configured to receive a first poll frame sent by an SBP responder during an SBP sensing measurement process;
a CTS sending module 902 configured to send a CTS-to-self frame to the SBP responder in response to the first poll frame; and
a report receiving module 903 configured to receive an SBP sensing measurement report sent by the SBP responder.

Optionally, in the embodiment of the present disclosure, the electronic device further includes:
a first execution module configured to: receive a second poll frame sent by the SBP responder, where the second poll frame is a unicast message frame; and
send an ACK frame to the SBP responder in response to the second poll frame, and receive the SBP sensing measurement report sent by the SBP initiator.

Optionally, in the embodiment of the present disclosure, the electronic device further includes:
a second execution module configured to: receive a third poll frame sent by the SBP responder after completion of a sensing measurement exchange of TF Sounding, where the third poll frame is a broadcast message frame; and
send an ACK frame to the SBP responder in response to the third poll frame, and receive the SBP sensing measurement report sent by the SBP initiator.

Optionally, in the embodiment of the present disclosure, the electronic device further includes:
a third execution module configured to: receive a trigger frame sent by the SBP responder after completion of a sensing measurement exchange of NDPA Sounding, or after completion of a sensing measurement exchange of the NDPA Sounding and a sensing measurement exchange of TF Sounding; and
send an ACK frame to the SBP responder in response to the trigger frame, and receive the SBP sensing measurement report sent by the SBP initiator.

Optionally, in the embodiment of the present disclosure, the first poll frame is a broadcast message frame.

The embodiment of the present disclosure also provides an SBP measurement device applied to an SBP initiator. The device includes:
a poll frame receiving module configured to receive a first poll frame sent by an SBP responder during an SBP sensing measurement process;
a CTS frame sending module configured to send a CTS-to-self frame to the SBP responder in response to the first poll frame; and
an SBP report receiving module configured to receive an SBP sensing measurement report sent by the SBP responder.

The device also includes other modules of the electronic device in the foregoing embodiments, and will not be repeated here.

In an optional embodiment, the embodiment of the present disclosure also provides an electronic device. As shown in FIG. 10, the electronic device 1000 shown in FIG. 10 can be a server, including: a processor 1001 and a memory 1003. The processor 1001 and the memory 1003 are connected, for example, through a bus 1002. Optionally, the electronic device 1000 can also include a transceiver 1004. It should be noted that in practical applications, the transceiver 1004 is not limited to one, and the structure of the electronic device 1000 does not limit the embodiment of the present disclosure.

The processor 1001 can be a Central Processing Unit (CPU), a general-purpose processor, a Digital Signal Processor (DSP), an Application Specific Integrated Circuit (ASIC), a Field Programmable Gate Array (FPGA), or other programmable logic devices, transistor logic devices, hardware components, or any combination thereof. It can implement or execute various exemplary logic blocks, modules, and circuits described in combination with the disclosed content of the present disclosure. The processor 1001 can also be a combination that realizes a computing function, for example, including a combination of one or more microprocessors, a combination of a DSP and a microprocessor, etc.

The bus 1002 can include a path for transmitting information among the above-mentioned components. The bus 1002 can be a Peripheral Component Interconnect (PCI) bus or an Extended Industry Standard Architecture (EISA) bus, etc. The bus 1002 can be divided into an address bus, a data bus, a control bus, etc. For the convenience of representation, only one thick line is used to represent it in FIG. 10, but it does not mean that there is only one bus or one type of bus.

The memory 1003 can be a Read Only Memory (ROM) or other types of static storage devices that can store static information and instructions, a Random Access Memory (RAM) or other types of dynamic storage devices that can store information and instructions, or it can also be an Electrically Erasable Programmable Read Only Memory (EEPROM), a Compact Disc Read Only Memory (CD-ROM), or other optical disc storage, optical storage (including compact discs, laser discs, optical discs, digital versatile discs, Blu-ray discs, etc.), magnetic disk storage media, or other magnetic storage devices, or any other medium that can be used to carry or store the desired program code in the form of instructions or data structures and can be accessed by a computer, but is not limited thereto.

The memory 1003 is used to store the application program code for implementing the solution of the present disclosure, and is controlled and executed by the processor 1001. The processor 1001 is used to execute the application program code stored in the memory 1003 to implement the content shown in the foregoing method embodiments.

The electronic device includes, but is not limited to: mobile phones, laptop computers, digital broadcast receivers, Personal Digital Assistants (PDAs), tablet computers (PADs), Portable Multimedia Players (PMPs), in-vehicle terminals (such as in-vehicle navigation terminals), and other mobile terminals, as well as fixed terminals such as digital TVs and desktop computers. The electronic device shown in FIG. 10 is only an example and should not bring any limitations to the functions and application scope of the embodiment of the present disclosure.

The server provided by the present disclosure can be an independent physical server, a server cluster or a distributed system composed of multiple physical servers, or it can also be a cloud server that provides basic cloud computing services such as cloud services, cloud databases, cloud computing, cloud functions, cloud storage, network services, cloud communications, middleware services, domain name services, security services, CDN, and big data and artificial intelligence platforms. The terminal can be a smart phone, a tablet computer, a laptop computer, a desktop computer, a smart speaker, a smart watch, etc., but is not limited thereto. The terminal and the server can be directly or indirectly connected through a wired or wireless communication method, and the present disclosure does not limit this.

An embodiment of the present disclosure provides a computer-readable storage medium. A computer program is stored on the computer-readable storage medium. When it runs on a computer, it enables the computer to execute the corresponding content in the foregoing method embodiments.

It should be understood that although the steps in the flowcharts of the drawings are shown in sequence according to the arrows, these steps are not necessarily executed in the order indicated by the arrows. Unless there is a clear indication in this disclosure, the execution of these steps is not strictly limited by the order, and they can be executed in other orders. Moreover, at least some of the steps in the flowcharts of the drawings may include multiple sub-steps or multiple stages. These sub-steps or stages are not necessarily completed at the same time but can be executed at different times. Their execution order is not necessarily sequential either; instead, they can be executed alternately or in turn with at least some of the sub-steps or stages of other steps.

It should be noted that the computer-readable medium in the present disclosure can be a computer-readable signal medium, a computer-readable storage medium, or any combination of the two. For example, a computer-readable storage medium can be, but is not limited to, a system, device, or component of electricity, magnetism, light, electromagnetism, infrared, or semiconductor, or any combination of the above. More specific examples of computer-readable storage medium may include, but are not limited to: electrical connections with one or more wires, portable computer disks, hard disks, random access memory (RAM), read-only memory (ROM), erasable programmable read-only memory (EPROM or flash memory), optical fibers, portable compact disc read-only memory (CD-ROM), optical storage devices, magnetic storage devices, or any suitable combination of the above. In the present disclosure, a computer-readable storage medium can be any tangible medium that contains or stores a program, and this program can be used by or in combination with an instruction execution system, device, or component. In the present disclosure, a computer-readable signal medium can include data signals propagated in the baseband or as part of a carrier wave, in which computer-readable program code is carried. Such propagated data signals can take various forms, including but not limited to electromagnetic signals, optical signals, or any suitable combination of the above. A computer-readable signal medium can also be any computer-readable medium other than a computer-readable storage medium. This computer-readable signal medium can send, propagate, or transmit a program for use by or in combination with an instruction execution system, device, or component. The program code contained on the computer-readable medium can be transmitted by any appropriate medium, including but not limited to wires, optical cables, radio frequency (RF), etc., or any suitable combination of the above.

The above-mentioned computer-readable medium can be included in the above-mentioned electronic device or exist independently without being assembled into the electronic device.

The above-mentioned computer-readable medium carries one or more programs. When the one or more programs are executed by the electronic device, the electronic device is enabled to execute the methods shown in the above embodiments.

According to one aspect of the present disclosure, a computer program product or a computer program is provided. The computer program product or computer program includes computer instructions, and the computer instructions are stored in a computer-readable storage medium. A processor of a computer device reads the computer instructions from the computer-readable storage medium, and the processor executes the computer instructions to enable the computer device to execute the methods provided in the above various optional implementations.

Computer program code for executing the operations of the present disclosure can be written in one or more programming languages or a combination thereof. The above programming languages include object-oriented programming languages such as Java, Smalltalk, and C++, as well as conventional procedural programming languages such as the "C" language or similar programming languages. The program code can be executed entirely on a user's computer, partially on a user's computer, as an independent software package, partially on a user's computer and partially on a remote computer, or entirely on a remote computer or server. In the case of a remote computer, the remote computer can be connected to the user's computer through any type of network including a local area network (LAN) or a wide area network (WAN), or can be connected to an external computer (for example, through the Internet using an Internet service provider).

The flowcharts and block diagrams in the drawings illustrate the possible implementation architectures, functions, and operations of the systems, methods, and computer program products according to various embodiments of the present disclosure. In this regard, each block in the flowchart or block diagram can represent a module, a program segment, or a part of code, and this module, program segment, or part of code contains one or more executable instructions for implementing the specified logical function. It should also be noted that in some alternative implementations, the functions marked in the blocks can occur in an order different from that marked in the drawings. For example, two consecutive blocks can actually be executed substantially in parallel, and they can sometimes be executed in the opposite order, depending on the functions involved. It should also be noted that each block in the block diagram and/or flowchart, as well as the combination of blocks in the block diagram and/or flowchart, can be implemented by a dedicated hardware-based system that executes the specified functions or operations, or can be implemented by a combination of dedicated hardware and computer instructions.

The modules involved in the embodiments of the present disclosure can be implemented by software or hardware. The name of a module does not, in some cases, limit the module itself. For example, an A module can also be described as "an A module for performing B operations".

The above description is only an explanation of preferred embodiments of the present disclosure and the applied technical principles. Those skilled in the art should understand that the scope of disclosure involved in the present disclosure is not limited to the technical solutions formed by the specific combination of the above technical features. It also covers other technical solutions formed by any combination of the above technical features or their equivalent features without departing from the disclosed concept, for example, technical solutions formed by interchangeably substituting the above features with the technical features disclosed in the present disclosure (but not limited to) that have similar functions.

## Claims

1. A Sensing By Proxy, SBP, measurement method, applied to an SBP responder, comprising:
sending, during an SBP sensing measurement process, a first poll frame to an SBP initiator; and
sending, upon receiving a Clear to Send to Self, CTS-to-self, frame fed back by the SBP initiator in response to the first poll frame, an SBP sensing measurement report to the SBP initiator.

2. The method according to claim 1, wherein, after sending the first poll frame to the SBP initiator, the method further comprises:
in case that the CTS-to-self frame fed back by the SBP initiator is not received, sending a second poll frame to the SBP initiator, wherein the second poll frame is a unicast message frame; and
in case that an Acknowledgement, ACK, frame fed back by the SBP initiator in response to the second poll frame is received, sending the SBP sensing measurement report to the SBP initiator,
in case that the ACK frame fed back by the SBP initiator in response to the second poll frame is not received, terminating a sensing measurement exchange of the SBP sensing measurement process.

3. The method according to claim 1, further comprising:
sending a third poll frame to the SBP initiator after completion of a sensing measurement exchange of Trigger Frame, TF, Sounding, wherein the third poll frame is a broadcast message frame; and
in case that an Acknowledgement, ACK, frame fed back by the SBP initiator in response to the third poll frame is received, sending the SBP sensing measurement report to the SBP initiator,
in case that the ACK frame fed back by the SBP initiator in response to the third poll frame is not received, terminating a sensing measurement exchange of the SBP sensing measurement process.

4. The method according to claim 1, further comprising:
sending a trigger frame to the SBP initiator after completion of a sensing measurement exchange of Null Data Packet Announcement, NDPA, Sounding, or after completion of the sensing measurement exchange of the NDPA Sounding and a sensing measurement exchange of Trigger Frame, TF, Sounding; and
in case that an Acknowledgement, ACK, frame fed back by the SBP initiator in response to the trigger frame is received, sending the SBP sensing measurement report to the SBP initiator,
in case that the ACK frame fed back by the SBP initiator in response to the trigger frame is not received, terminating a sensing measurement exchange of the SBP sensing measurement process.

5. The method according to any one of claims 1 to 4, wherein the first poll frame is a broadcast message frame.

6. A Sensing By Proxy, SBP, measurement method, applied to an SBP initiator, comprising:
receiving, during an SBP sensing measurement process, a first poll frame sent by an SBP responder;
sending a Clear to Send to Self, CTS-to-self, frame to the SBP responder in response to the first poll frame; and
receiving an SBP sensing measurement report sent by the SBP responder.

7. The method according to claim 6, wherein, after receiving the first poll frame sent by the SBP responder, the method further comprises:
receiving a second poll frame sent by the SBP responder, wherein the second poll frame is a unicast message frame; and
sending an Acknowledgement, ACK, frame to the SBP responder in response to the second poll frame, and receiving the SBP sensing measurement report sent by the SBP initiator.

8. The method according to claim 6, further comprising:
receiving a third poll frame sent by the SBP responder after completion of a sensing measurement exchange of Trigger Frame, TF, Sounding, wherein the third poll frame is a broadcast message frame; and
sending an Acknowledgement, ACK, frame to the SBP responder in response to the third poll frame, and receiving the SBP sensing measurement report sent by the SBP initiator.

9. The method according to claim 6, further comprising:
receiving a trigger frame sent by the SBP responder after completion of a sensing measurement exchange of Null Data Packet Announcement, NDPA, Sounding, or after completion of the sensing measurement exchange of the NDPA Sounding and a sensing measurement exchange of Trigger Frame, TF, Sounding; and
sending an Acknowledgement, ACK, frame to the SBP responder in response to the trigger frame, and receiving the SBP sensing measurement report sent by the SBP initiator.

10. The method according to any one of claims 6 to 9, wherein the first poll frame is a broadcast message frame.

11. An electronic device, being a Sensing By Proxy, SBP, responder, comprising:
a poll frame sending module configured to send a first poll frame to an SBP initiator during an SBP sensing measurement process; and
a report sending module configured to send an SBP sensing measurement report to the SBP initiator upon receiving a Clear to Send to Self, CTS-to-self, frame fed back by the SBP initiator in response to the first poll frame.

12. An electronic device, being a Sensing By Proxy, SBP, initiator, comprising:
a poll frame receiving module configured to receive a first poll frame sent by an SBP responder during an SBP sensing measurement process;
a CTS sending module configured to send a Clear to Send to Self, CTS-to-self, frame to the SBP responder in response to the first poll frame; and
a report receiving module configured to receive an SBP sensing measurement report sent by the SBP responder.

13. An electronic device, comprising:
a processor; and
a memory storing a computer program executable by the processor;
wherein the processor, when executing the computer program, implements the method according to any one of claims 1 to 5 or the method according to any one of claims 6 to 10.

14. A computer-readable storage medium, storing a computer program that, when executed by a processor, causes the processor to implement the method according to any one of claims 1 to 5 or the method according to any one of claims 6 to 10.
